# EUROPEAN PATENT APPLICATION

(11) **EP 4 447 570 A1**
(43) Date of publication of application: **16.10.2024**
(21) Application number: 22920061.3
(22) Date of filing: 26.12.2022
(51) Int. Cl.: H04W 56/00

(54) **TIMING METHOD, COMMUNICATION APPARATUS, AND COMMUNICATION SYSTEM**

(30) Priority: 14.01.2022 CN 202210041312
(71) Applicant: Huawei Technologies Co., Ltd., Shenzhen, Guangdong 518129 (CN)
(72) Inventor: ZANG, Xin, Shenzhen, Guangdong 518129 (CN); ZHOU, Runze, Shenzhen, Guangdong 518129 (CN); WANG, Yuan, Shenzhen, Guangdong 518129 (CN)
(74) Representative: Pfenning, Meinig & Partner mbB
(86) International application number: PCT/CN2022/141867
(87) International publication number: WO 2023/134431

(57) **Abstract**

Embodiments of this application provide a time service method, a communication apparatus, and a communication system. The method includes: When a time service of a terminal device is abnormal, that is, a first access network device cannot meet a time service precision required by the terminal device, the first access network device may notify a clock management network element, so that the clock management network element reselects a clock network element, and notifies the clock network element to provide the terminal device with clock information of a specific time service precision. The clock network element selected by the clock management network element may meet the time service precision required by the terminal device, or may not meet the time service precision required by the terminal device. In this solution, clock information of a proper time service precision can be provided for the terminal device, thereby helping implement normal clock synchronization of the terminal device.

## Description

### CROSS-REFERENCE TO RELATED APPLICATIONS

This application claims priority to Chinese Patent Application No. 202210041312.1, filed with the China National Intellectual Property Administration on January 14, 2022 and entitled "TIME SERVICE METHOD, COMMUNICATION APPARATUS, AND COMMUNICATION SYSTEM", which is incorporated herein by reference in its entirety.

### TECHNICAL FIELD

This application relates to the field of communication technologies, and in particular, to a time service method, a communication apparatus, and a communication system.

### BACKGROUND

A time service capability of a 5th generation (5th generation, 5G) network is a network function that can be opened to an external network. For example, a terminal device requests a 5G network for a time service. The terminal device sends a time service request to a clock management network element of a core network by using an access network device. The clock management network element selects, based on the time service request, proper clock information to perform a time service for the terminal device, that is, provides clock information of a proper clock precision for the terminal device.

### SUMMARY

Embodiments of this application provide a time service method, a communication apparatus, and a communication system, to provide proper clock information.

According to a first aspect, an embodiment of this application provides a time service method. The method may be performed by a clock management network element or a module (for example, a chip) in the clock management network element. For example, the method is performed by the clock management network element. The method includes: The clock management network element receives a first notification message from a first access network device, where the first notification message includes first indication information, identification information of the first access network device, and identification information of a terminal device, and the first indication information indicates that the first access network device cannot meet a time service precision required by the terminal device. The clock management network element obtains the time service precision required by the terminal device. The clock management network element notifies, if a clock network element meeting the time service precision required by the terminal device exists, the clock network element to provide the terminal device with clock information meeting the time service precision required by the terminal device.

In the foregoing solution, when a time service of the terminal device is abnormal, that is, the first access network device cannot meet the time service precision required by the terminal device, the first access network device may notify the clock management network element, so that the clock management network element reselects a clock network element, and notifies the clock network element to provide the terminal device with clock information of a specific time service precision. The clock network element selected by the clock management network element may meet the time service precision required by the terminal device, or may not meet the time service precision required by the terminal device. In this solution, clock information of a proper time service precision can be provided for the terminal device, thereby helping implement normal clock synchronization of the terminal device.

In a possible implementation method, the clock management network element obtains, from a unified data management network element, a time service precision to which the terminal device subscribes. If the time service precision to which the terminal device subscribes is higher than or equal to the time service precision required by the terminal device, and the clock network element meeting the time service precision required by the terminal device exists, the clock management network element notifies the clock network element to provide the terminal device with the clock information meeting the time service precision required by the terminal device.

In the foregoing solution, it can be ensured that the time service precision provided for the terminal device is not higher than the time service precision to which the terminal device subscribes, thereby helping provide clock information of a proper time service precision for the terminal device.

In a possible implementation method, the clock management network element sends a second notification message to the terminal device if the clock network element meeting the time service precision required by the terminal device does not exist, where the second notification message includes second indication information, and the second indication information indicates that the time service precision required by the terminal device cannot be met.

In a possible implementation method, the second notification message further includes identification information of one or more clock network elements and one or more time service precisions of the clock network element. The clock management network element receives a request message from the terminal device, where the request message includes the identification information of the terminal device, identification information of a clock network element selected by the terminal device, and a time service precision selected by the terminal device. The clock management network element notifies the clock network element selected by the terminal device to provide clock information for the terminal device, where the clock information meets the time service precision selected by the terminal device.

In the foregoing solution, when the clock management network element determines that the clock network element meeting the time service precision required by the terminal device does not exist, the clock management network element notifies the terminal device that the time service precision required by the terminal device cannot be met. If the terminal device can accept reduction of a time service precision, the terminal device selects a time service precision, and requests the clock management network element to obtain clock information of the time service precision. This helps provide clock information of a proper time service precision for the terminal device.

In a possible implementation method, the clock management network element obtains, from a unified data management network element, a time service precision to which the terminal device subscribes. The clock management network element sends the second notification message to the terminal device if the time service precision to which the terminal device subscribes is higher than or equal to the time service precision required by the terminal device, but the clock network element meeting the time service precision required by the terminal device does not exist.

In the foregoing solution, it can be ensured that the time service precision provided for the terminal device is not higher than the time service precision to which the terminal device subscribes, thereby helping provide clock information of a proper time service precision for the terminal device.

In a possible implementation method, the first notification message further includes the time service precision required by the terminal device. The clock management network element obtains, from the first notification message, the time service precision required by the terminal device.

In a possible implementation method, the first notification message further includes identification information of a faulty clock source in the first access network device, the clock source provides clock information for the terminal device, and the clock information meets the time service precision required by the terminal device. The clock management network element obtains a time service precision of the clock source from the first access network device or the clock management network element, and determines that the time service precision of the clock source is the time service precision required by the terminal device.

In a possible implementation method, the first notification message further includes identification information of a second access network device, the second access network device is an access network device that provides a service for the terminal device before handover, and the first access network device is an access network device that provides a service for the terminal device after handover. The clock management network element sends a query message to the second access network device, where the query message includes the identification information of the terminal device, and the query message is used to query the time service precision required by the terminal device. The clock management network element receives, from the second access network device, the time service precision required by the terminal device.

According to a second aspect, an embodiment of this application provides a time service method. The method may be performed by a terminal device or a module (for example, a chip) in the terminal device. For example, the method is performed by the terminal device. The method includes: The terminal device receives a notification message from an access network device, where the notification message includes indication information and a time service precision of the access network device, and the indication information indicates that the access network device cannot meet a time service precision required by the terminal device. The terminal device sends a first request message to a clock management network element if the terminal device does not accept reduction of a time service precision, where the first request message includes identification information of the terminal device and the time service precision required by the terminal device, and the first request message is used to request clock information meeting the time service precision required by the terminal device.

In the foregoing solution, when a time service of the terminal device is abnormal, the clock information meeting the time service precision required by the terminal device may be provided for the terminal device based on selection of the terminal device, so as to provide the terminal device with clock information of a proper time service precision, thereby helping implement normal clock synchronization of the terminal device.

In a possible implementation method, the terminal device sends a second request message to the access network device if the terminal device accepts reduction of a time service precision, where the second request message includes the identification information of the terminal device, and the second request message is used to request the access network device to provide a time service for the terminal device.

In the foregoing solution, when a time service of the terminal device is abnormal, clock information obtained after a time service precision is reduced may be provided for the terminal device based on selection of the terminal device, so as to provide the terminal device with clock information of a proper time service precision, thereby helping implement normal clock synchronization of the terminal device.

In a possible implementation method, the time service precision of the access network device is a plurality of time service precisions. The terminal device selects one time service precision from the plurality of time service precisions, where the second request message further includes the selected time service precision.

In a possible implementation method, the access network device is an access network device that provides a service for the terminal device after handover; or the access network device is an access network device that currently provides a service for the terminal device, a clock source in the access network device is faulty, the clock source provides clock information for the terminal device before the clock source is faulty, and the clock information meets time service precision required by the terminal device.

According to a third aspect, an embodiment of this application provides a time service method. The method may be performed by a first access network device or a module (for example, a chip) in the first access network device. For example, the method is performed by the first access network device. The method includes: The first access network device determines that a time service precision required by a terminal device cannot be met. The first access network device sends a notification message to a clock management network element, where the notification message includes indication information, identification information of the first access network device, and identification information of the terminal device, and the indication information indicates that the first access network device cannot meet the time service precision required by the terminal device.

In the foregoing solution, when the first access network device determines that the time service precision required by the terminal device cannot be met, the first access network device notifies the clock management network element that the time service precision required by the terminal device cannot be met, so that the clock management network element can reselect a clock network element for the terminal device, and notify the clock network element to provide a time service for the terminal device, thereby providing clock information of a proper time service precision for the terminal device, and helping implement normal clock synchronization of the terminal device.

In a possible implementation method, a clock source in the first access network device is faulty, the clock source provides clock information for the terminal device before the clock source is faulty, and the clock information meets the time service precision required by the terminal device.

In a possible implementation method, the notification message further includes the time service precision required by the terminal device.

In a possible implementation method, the notification message further includes identification information of a second access network device, the second access network device is an access network device that provides a service for the terminal device before handover, and the first access network device is an access network device that provides a service for the terminal device after handover.

According to a fourth aspect, an embodiment of this application provides a communication apparatus. The apparatus may be a clock management network element or a module (for example, a chip) in the clock management network element. The apparatus has a function of implementing any implementation method in the first aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus may be a terminal device or a module (for example, a chip) in the terminal device. The apparatus has a function of implementing any implementation method in the second aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be an access network device or a module (for example, a chip) in the access network device. The apparatus has a function of implementing any implementation method in the third aspect. The function may be implemented by hardware, or may be implemented by hardware executing corresponding software. The hardware or the software includes one or more modules corresponding to the function.

According to a seventh aspect, an embodiment of this application provides a communication apparatus, including a processor coupled to a memory. The processor is configured to invoke a program stored in the memory, to perform any implementation method in the first aspect to the third aspect. The memory may be located inside or outside the apparatus. In addition, there may be one or more processors.

According to an eighth aspect, an embodiment of this application provides a communication apparatus, including a processor and an interface circuit. The processor is configured to: communicate with another apparatus by using the interface circuit, and perform any implementation method in the first aspect to the third aspect. There are one or more processors.

According to a ninth aspect, an embodiment of this application provides a communication apparatus, including a processor and a memory. The memory is configured to store computer instructions, and when the apparatus runs, the processor executes the computer instructions stored in the memory, so that the apparatus performs any implementation method in the first aspect to the third aspect.

According to a tenth aspect, an embodiment of this application provides a communication apparatus, including units or means (means) configured to perform steps of any implementation method in the first aspect to the third aspect.

According to an eleventh aspect, an embodiment of this application further provides a computer-readable storage medium. The computer-readable storage medium stores instructions, and when the instructions are run on a communication apparatus, any implementation method in the first aspect to the third aspect is performed.

According to a twelfth aspect, an embodiment of this application further provides a computer program product. The computer program product includes a computer program or instructions. When the computer program or the instructions are run by a communication apparatus, any implementation method in the first aspect to the third aspect is performed.

According to a thirteenth aspect, an embodiment of this application further provides a chip system, including: a processor, configured to perform any implementation method in the first aspect to the third aspect.

According to a fourteenth aspect, an embodiment of this application further provides a communication system, including a first access network device and a clock management network element configured to perform any method in the first aspect. The first access network device is configured to send a first notification message to the clock management network element.

### BRIEF DESCRIPTION OF DRAWINGS

FIG. 1 is a diagram of a 5G network architecture based on a service-based architecture;
FIG. 2 is a diagram of a 5G network architecture based on a point-to-point interface;
FIG. 3(a) is a flowchart of a time service method according to an embodiment of this application;
FIG. 3(b) is a flowchart of a time service method according to an embodiment of this application;
FIG. 4A and FIG. 4B are a flowchart of a time service method according to an embodiment of this application;
FIG. 5A and FIG. 5B are a flowchart of a time service method according to an embodiment of this application;
FIG. 6 is a flowchart of a time service method according to an embodiment of this application;
FIG. 7 is a diagram of a communication apparatus according to an embodiment of this application; and
FIG. 8 is a diagram of a communication apparatus according to an embodiment of this application.

### DESCRIPTION OF EMBODIMENTS

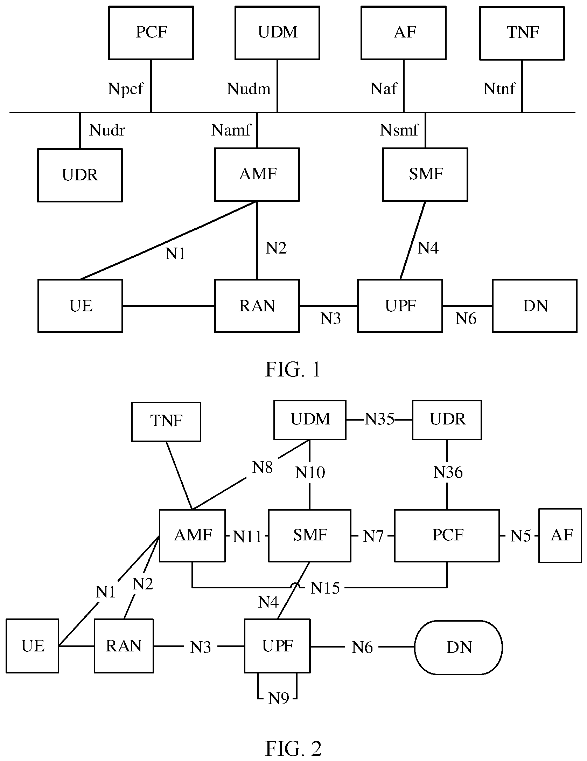

FIG. 1 is a diagram of a 5G network architecture based on a service-based architecture. The 5G network architecture shown in FIG. 1 may include a data network (data network, DN) and a carrier network. The following briefly describes functions of some network elements in the 5G network architecture.

The carrier network may include one or more of the following network elements: an authentication server function (Authentication Server Function, AUSF) network element (not shown in the figure), a unified data management (unified data management, UDM) network element, a unified data repository (Unified Data Repository, UDR) network element, a network repository function (Network Repository Function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a UPF network element, a radio access network (radio access network, RAN) device, a timing network function (timing network function, TNF) network element, and the like. In the carrier network, a network element or a device other than the radio access network device may be referred to as a core network element or a core network device.

A radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes some functions of the base station, for example, may be a central unit (central unit, CU), or may be a distributed unit (distributed unit, DU). The radio access network device may be a macro base station, may be a micro base station or an indoor base station, or may be a relay node, a donor node, or the like. A specific technology and a specific device form that are used by the radio access network device are not limited in embodiments of this application.

A terminal device communicating with the RAN may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wear, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

A radio access network device and the terminal device may be at fixed locations, or may be movable. The radio access network device and the terminal device may be deployed on land, including an indoor or outdoor device, or a handheld or vehicle-mounted device; may be deployed on water; or may be deployed on an airplane, a balloon, and an artificial satellite in the air. Application scenarios of the radio access network device and the terminal device are not limited in embodiments of this application.

A mobility management network element is a control plane network element provided by the carrier network, and is responsible for access control and mobility management for accessing the carrier network by the terminal device, for example, including functions such as mobility status management, allocation of a temporary user identity, and user authentication and authorization. In 5G, the mobility management network element may be the AMF network element. In future communication, for example, in 6th generation (the 6th generation, 6G), the mobility management network element may still be the AMF network element, or may have another name. This is not limited in this application.

A session management network element is a control plane network element provided by the carrier network, and is responsible for managing a protocol data unit (protocol data unit, PDU) session of the terminal device. The PDU session is a channel used to communicate a PDU, and the terminal device needs to communicate a PDU to the DN through the PDU session. The SMF network element is responsible for establishment, maintenance, deletion, and the like of the PDU session. The session management network element includes session-related functions such as session management (for example, session establishment, modification, and release, including tunnel maintenance between a user plane network element and an access network device), user plane network element selection and control, service and session continuity (Service and Session Continuity, SSC) mode selection, and roaming. In 5G, the session management network element may be the SMF network element. In future communication, for example, in 6G, the session management network element may still be the SMF network element, or may have another name. This is not limited in this application.

A user plane network element is a gateway provided by a carrier, and is a gateway for communication between the carrier network and the DN. The UPF network element includes user plane-related functions such as packet routing and transmission, packet detection, service usage reporting, quality of service (Quality of Service, QoS) processing, lawful interception, uplink packet detection, and downlink packet storage. In 5G, the user plane network element may be the UPF network element. In future communication, for example, in 6G, the user plane network element may still be the UPF network element, or may have another name. This is not limited in this application.

A data management network element is a control plane network element provided by the operator, and is responsible for storing information such as a subscriber permanent identifier (subscriber permanent identifier, SUPI), a credential (credential), a security context (security context), and subscription data of a subscriber in the carrier network. The information stored in the data management network element may be used for authentication and authorization for the terminal device to access the carrier network. The subscriber in the carrier network may be specifically a user using a service provided by the carrier network, for example, a user using a SIM card of China Telecom, or a user using a SIM card of China Mobile. The subscriber permanent identifier (Subscriber Permanent Identifier, SUPI) of the subscriber may be a number of the SIM card or the like. The credential and the security context of the subscriber may be stored small files such as an encryption key of the SIM card or information related to encryption of the SIM card, and are used for authentication and/or authorization. The security context may be a cookie (cookie), a token (token), or the like stored in a local terminal (for example, a mobile phone) of the user. The subscription data of the subscriber may be a supporting service of the SIM card, for example, a traffic package or a used network of the SIM card. It should be noted that the permanent identifier, the credential, the security context, the cookie (cookie), and the token are equivalent to information related to authentication and authorization, and are not limited or distinguished between each other for ease of description in this application document. Unless otherwise specified, the security context is used as an example for description in embodiments of this application. However, embodiments of this application are also applicable to authentication and/or authorization information described in another manner. In 5G, the data management network element may be the UDM network element. In future communication, for example, in 6G, the data management network element may still be the UDM network element, or may have another name. This is not limited in this application.

The unified data repository network element is a control plane network element provided by a carrier, and includes a function of accessing data of a type such as subscription data, policy data, and application data. In 5G, the unified data repository network element may be the UDR network element. In future communication, for example, in 6G, the unified data repository network element may still be the UDR network element, or may have another name. This is not limited in this application.

A network exposure network element is a control plane network element provided by a carrier. The network exposure network element exhibits an external interface of the carrier network to a third party securely. When the session management network element needs to communicate with a third-party network element, the network exposure network element may be used as a relay for communication between the session management network element and the third-party network element. When the network exposure network element serves as the relay, the network exposure network element may translate identification information of the subscriber and identification information of the third-party network element. For example, when sending the SUPI of the subscriber from the carrier network to the third party, the network exposure network element may translate the SUPI into an external identity (identity, ID) corresponding to the SUPI. On the contrary, when sending the external ID (a network element ID of the third party) to the carrier network, the network exposure network element may translate the external ID into the SUPI. In 5G, the network exposure network element may be the NEF network element. In future communication, for example, in 6G, the network exposure network element may still be the NEF network element, or may have another name. This is not limited in this application.

An application function network element is configured to transfer a requirement of an application side for a network side, for example, a QoS requirement or a user status event subscription. The application function network element may be a third-party functional entity, or may be an application server deployed by the carrier. In 5G, the application function network element may be the AF network element. In future communication, for example, in 6G, the application function network element may still be the AF network element, or may have another name. This is not limited in this application.

A policy control network element is a control plane function provided by the carrier, and is configured to provide a policy of the PDU session for the session management network element. The policy may include a charging-related policy, a QoS-related policy, an authorization-related policy, and the like. In 5G, the policy control network element may be the PCF network element. In future communication, for example, in 6G, the policy control network element may still be the PCF network element, or may have another name. This is not limited in this application.

A network repository function network element may be configured to: provide a network element discovery function, and provide, based on a request of another network element, network element information corresponding to a network element type. The network repository function network element further provides a network element management service, for example, network element registration, update, and de-registration, and network element status subscription and push. In 5G, the network repository function network element may be the NRF network element. In future communication, for example, in 6G, the network repository function network element may still be the NRF network element, or may have another name. This is not limited in this application.

A clock management network element may be configured to manage clock information of one or more clock sources in the 5G network, and may provide the clock information of the clock source externally through a port of the clock management network element, for example, directly or indirectly provide the clock information for the terminal device, the access network device, the core network device, or the third-party application function network element. The clock information indicates a time, a moment, or a time point of a clock, and the clock information may also be referred to as time information. In 5G, the clock management network element may be the TNF network element. In future communication, for example, in 6G, the clock management network element may still be the TNF network element, or may have another name. This is not limited in this application. In an implementation method, a time-sensitive communication and time synchronization function (Time Sensitive Communication and Time Synchronization Function, TSCTSF) network element defined in 3GPP, for example, a TSCTSF network element defined in the 3GPP R17 standard, can implement some or all functions of the TNF network element in embodiments of this application.

A DN is a network located outside the carrier network. The carrier network may access a plurality of DNs, and a plurality of services may be deployed on the DN, to provide services such as data and/or a voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, communicate collected sensor data to the control server according to the instructions, and the like. For another example, the DN is an internal office network of a company, a mobile phone or a computer of an employee of the company may be a terminal device, and the mobile phone or the computer of the employee may access information, a data resource, and the like in the internal office network of the company.

Npcf, Nufr, Nudm, Naf, Namf, and Nsmf in FIG. 1 are service-based interfaces provided by the PCF network element, the UDR network element, the UDM network element, the AF network element, the AMF network element, and the SMF network element, and are configured to invoke corresponding service-based operations. N1, N2, N3, N4, and N6 are interface sequence numbers. Meanings of these interface sequence numbers are as follows:
(1) N1: N1 is an interface between the AMF network element and the UE, and may be configured to transfer non-access stratum (non-access stratum, NAS) signaling (for example, including a QoS rule from the AMF network element) to the UE, and the like.
(2) N2: N2 is an interface between the AMF network element and the radio access network device, and may be configured to transfer radio bearer control information from a core network side to the radio access network device, and the like.
(3) N3: N3 is an interface between the radio access network device and the UPF network element, and is mainly configured to communicate uplink user plane data and/or downlink user plane data between the radio access network device and the UPF network element.
(4) N4: N4 is an interface between the SMF network element and the UPF network element, and may be configured to communicate information between a control plane and a user plane, for example, control the control plane to deliver a forwarding rule, a QoS rule, a traffic statistics collection rule, and the like to the user plane and report information about the user plane.
(5) N6: N6 is an interface between the UPF network element and the DN, and is configured to communicate an uplink user data flow and/or a downlink user data flow between the UPF network element and the DN.

FIG. 2 is a diagram of a 5G network architecture based on a point-to-point interface. For descriptions of functions of network elements, refer to the descriptions of the functions of the corresponding network elements in FIG. 1. Details are not described again. A main difference between FIG. 2 and FIG. 1 lies in that the interface between control plane network elements in FIG. 1 is the service-based interface, and an interface between control plane network elements in FIG. 2 is a point-to-point interface.

In the architecture shown in FIG. 2, names and functions of the interfaces between the network elements are as follows:
(1) For meanings of the N1, N2, N3, N4, and N6 interfaces, refer to the foregoing descriptions.
(2) N5: N5 is an interface between an AF network element and a PCF network element, and may be configured to deliver an application service request and report a network event.
(3) N7: N7 is an interface between the PCF network element and an SMF network element, and may be configured to deliver a protocol data unit (protocol data unit, PDU) session granularity control policy and a service data flow granularity control policy.
(4) N8: N8 is an interface between an AMF network element and a UDM network element, and may be used by the AMF network element to obtain subscription data and authentication data related to access and mobility management from the UDM network element, and used by the AMF network element to register information related to terminal device mobility management with the UDM network element, and the like.
(5) N9: N9 is a user plane interface between UPF network elements, and is configured to communicate an uplink user data flow and/or a downlink user data flow between the UPF network elements.
(6) N10: N10 is an interface between the SMF network element and the UDM network element, and may be used by the SMF network element to obtain subscription data related to session management from the UDM network element, and used by the SMF network element to register information related to a terminal device session with the UDM network element, and the like.
(7) N11: N11 is an interface between the SMF network element and the AMF network element, and may be configured to communicate PDU session tunnel information between the radio access network device and the UPF network element, communicate a control message sent to the terminal device, communicate radio resource control information sent to the radio access network device, and the like.
(8) N15: N15 is an interface between the PCF network element and the AMF network element, and may be configured to deliver a terminal device policy and an access control-related policy.
(9) N35: N35 is an interface between the UDM network element and a UDR network element, and may be used by the UDM network element to obtain user subscription data information from the UDR network element.
(10) N36: N36 is an interface between the PCF network element and the UDR network element, and may be used by the PCF network element to obtain policy-related subscription data and application data-related information from the UDR network element.

It may be understood that the foregoing network elements or functions may be network elements in a hardware device, software functions running on dedicated hardware, or virtualized functions instantiated on a platform (for example, a cloud platform). Optionally, the foregoing network elements or functions may be implemented by one device, or may be jointly implemented by a plurality of devices, or may be one function module in one device. This is not specifically limited in embodiments of this application.

In embodiments of this application, an example in which the TNF network element is the clock management network element is used for description, and the TNF network element is referred to as a TNF for short. In embodiments of this application, an example in which the base station is used as the access network device is used for description.

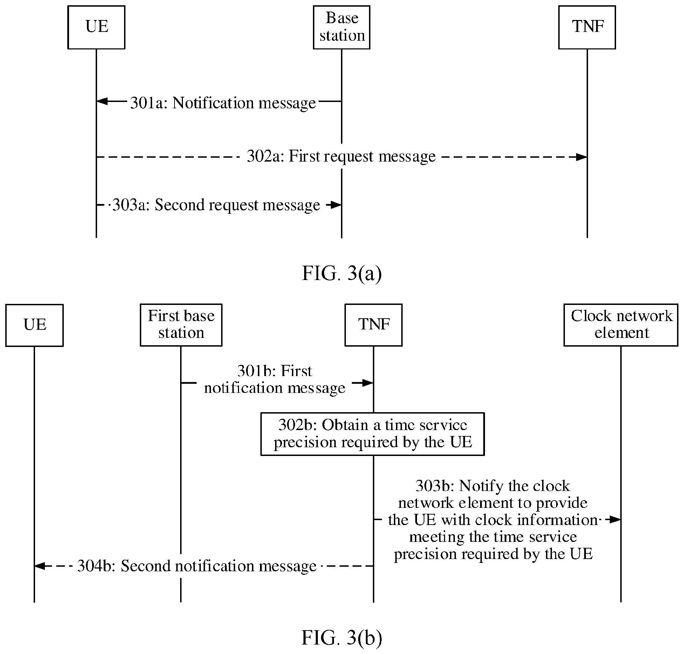

FIG. 3(a) is a flowchart of a time service method according to an embodiment of this application. The method includes the following steps.

Step 301a: A base station sends a notification message to UE.

The notification message includes indication information and a time service precision of the base station, and the indication information indicates that the base station cannot meet a time service precision required by the UE.

In this embodiment of this application, the time service precision is a precision of clock information that can be provided, for example, may be a nanosecond (ns), a microsecond (µs), or a millisecond (ms). The time service precision of the base station is a precision of clock information provided by each clock source in the base station. For example, the base station includes three clock sources: a clock source 1, a clock source 2, and a clock source 3; and a precision of clock information provided by the clock source 1 is a nanosecond, a precision of clock information provided by the clock source 2 is a microsecond, and a precision of clock information provided by the clock source 3 is a millisecond. In this case, the time service precision of the base station includes a nanosecond, a microsecond, and a millisecond. Unified description is provided herein, and details are not described below.

If a plurality of clock sources that work normally exist on the base station, the notification message may include time service precisions of one or more clock sources in the plurality of clock sources that work normally. If one clock source that works normally exists on the base station, the notification message includes a time service precision of the clock source that works normally.

In an implementation method, the base station herein may be a base station that provides a service for the UE after handover, and is also referred to as a target base station. Before the handover, a source base station provides a service for the UE, and the source base station can provide the UE with clock information meeting the time service precision required by the UE. However, after the handover, because a capability of the target base station is limited, the target base station cannot provide the UE with the clock information meeting the time service precision required by the UE. In this case, the target base station sends the notification message to the UE, and the notification message includes indication information indicating that the target base station cannot meet the time service precision required by the UE, and includes a time service precision of the target base station. For example, if the time service precision required by the UE is nanosecond (ns), the source base station has clock information that can provide a nanosecond level, and the target base station can provide only clock information of a microsecond (µs) level and a millisecond (ms) level, the notification message may include the indication information, a microsecond-level time service precision, and a millisecond-level time service precision.

In another implementation method, the base station herein may be a base station that currently provides a service for the UE. A clock source exists on the base station, and the clock source may provide the UE with clock information meeting the time service precision required by the UE. When the clock source is faulty, and consequently cannot continue to provide the UE with the clock information meeting the time service precision required by the UE, if another clock source with a low time service precision exists on the base station, the base station may send the notification message to the terminal. The notification message includes the indication information indicating that the base station cannot meet the time service precision required by the UE, and includes a time service precision of the clock source that works normally on the base station. Time service precisions of these clock sources that work normally are lower than a time service precision of the faulty clock source.

If the UE receives the notification message, and learns, based on the indication information, that a time service precision needs to be reduced, the UE determines, based on the time service precision of the base station in the notification message, whether to accept reduction of a time service precision. If the UE does not accept reduction of a time service precision, the UE performs step 302a, that is, requests a TNF to re-determine, for the UE, a clock network element that can provide clock information meeting the time service precision required by the UE. If the UE accepts reduction of a time service precision, the UE performs step 303a, that is, requests the base station to provide a time service for the UE.

Step 302a: If the UE does not accept reduction of a time service precision, the UE sends a first request message to the TNF, where the first request message includes identification information of the UE and the time service precision required by the UE, and the first request message is used to request clock information meeting the time service precision required by the UE.

After receiving the first request message, the TNF selects, for the UE based on the time service precision required by the UE, a clock network element that can meet the time service precision required by the UE, and notifies the clock network element to provide the UE with clock information that can meet the time service precision required by the UE, so that the UE performs clock synchronization based on the clock information. Optionally, the clock network element may be, for example, another base station, a UPF, the TNF, or another network element. This is not limited in this application.

Step 303a: If the UE accepts reduction of a time service precision, the UE sends a second request message to the base station, where the second request message includes identification information of the UE, and the second request message is used to request the base station to provide a time service for the UE.

In an implementation method, when the base station has only one clock source, and the base station is a base station that provides a service for the UE after handover, after receiving the second request message, the base station provides clock information of the clock source for the UE, so that the UE performs clock synchronization based on the clock information.

In another implementation method, if the time service precision of the base station in the notification message in 301a is a plurality of time service precisions, the UE further selects one time service precision from the plurality of time service precisions, and then adds, to the second request message, the time service precision selected by the UE. After receiving the second request message, the base station determines a clock source corresponding to the time service precision selected by the UE, and then provides clock information of the clock source for the UE, so that the UE performs clock synchronization based on the clock information.

In the foregoing solution, when a time service of the UE is abnormal, clock information obtained after a time service precision is reduced may be provided for the UE based on selection of the UE, or clock information meeting the time service precision required by the UE may be provided for the UE, so that clock information of a proper time service precision is provided for the UE, thereby helping implement normal clock synchronization of the UE.

FIG. 3(b) is a flowchart of a time service method according to an embodiment of this application. The method includes the following steps.

Step 301b: If a first base station determines that a time service precision required by UE cannot be met, the first base station sends a first notification message to a TNF, where the first notification message includes first indication information, identification information of the first base station, and identification information of the UE, and the first indication information indicates that the first base station cannot meet the time service precision required by the UE.

In an implementation method, the first base station herein may be a base station that provides a service for the UE after handover, and is also referred to as a target base station. Before the handover, a second base station (also referred to as a source base station) provides a service for the UE, and the second base station can provide the UE with clock information meeting the time service precision required by the UE. However, after the handover, because a capability of the first base station is limited, the first base station cannot provide the UE with the clock information meeting the time service precision required by the UE. In this case, the first base station sends the first notification message to the TNF, and the first notification message includes first indication information indicating that the first base station cannot meet the time service precision required by the UE, and includes the identification information of the first base station and the identification information of the UE. For example, if the time service precision required by the UE is nanosecond (ns), the second base station has clock information that can provide a nanosecond level, and the first base station can provide only clock information of a microsecond (µs) level and a millisecond (ms) level, the first notification message may include the first indication information, the identification information of the first base station, and the identification information of the UE.

In another implementation method, the first base station herein may be a base station that currently provides a service for the UE. A clock source exists on the first base station, and the clock source may provide the UE with clock information meeting the time service precision required by the UE. When the clock source is faulty, and consequently cannot continue to provide the UE with the clock information meeting the time service precision required by the UE, the first base station may send the first notification message to the TNF. The first notification message includes the first indication information indicating that the first base station cannot meet the time service precision required by the UE, and includes the identification information of the first base station and the identification information of the UE.

Step 302b: The TNF obtains the time service precision required by the UE.

In an implementation method, the first notification message may further include the time service precision required by the UE, and the TNF may obtain, from the first notification message, the time service precision required by the UE.

In another implementation method, the first base station is a base station that provides a service for the UE after handover, and the first notification message may further include identification information of the second base station (that is, identification information of a base station that provides a service for the UE before the handover). Therefore, the TNF may send a query message to the second base station based on the identification information of the second base station. The query message includes the identification information of the UE, and the query message is used to query the time service precision required by the UE. Then, the TNF receives, from the second base station, the time service precision required by the UE.

In another implementation method, the first base station may be a base station that currently provides a service for the UE. The first notification message further includes identification information of a faulty clock source in the first base station. The clock source provides clock information for the UE, and the clock information meets the time service precision required by the UE. The TNF may request, based on the identification information of the clock source, the first base station to obtain a time service precision of the clock source, and determine that the time service precision of the clock source is the time service precision required by the UE. Alternatively, if the TNF locally stores time service precisions of clock sources of the first base station, the TNF obtains a time service precision of a faulty clock source from the TNF based on identification information of the clock source in the first notification message, and determines that the time service precision of the clock source is the time service precision required by the UE.

After receiving the first notification message, the TNF determines whether there is a clock network element meeting the time service precision required by the UE. Specifically, the TNF may pre-obtain time service precisions of clock sources on a plurality of clock network elements (for example, one or more base stations, one or more UPFs, and one or more SMFs), and each clock network element may provide time service precisions of one or more clock sources. Then, the TNF locally stores the obtained time service precisions of the clock sources on the clock network elements. Therefore, the TNF may locally search, based on the time service precision required by the UE, for a clock network element that can meet the time service precision required by the UE.

If the clock network element meeting the time service precision required by the UE exists, step 303b is performed. If the clock network element meeting the time service precision required by the UE does not exist, step 304b is performed.

Step 303b: If a clock network element meeting the time service precision required by the UE exists, the TNF notifies the clock network element to provide the UE with clock information meeting the time service precision required by the UE.

For example, if the TNF determines that a UPF 1 can provide the clock information meeting the time service precision required by the UE, the TNF notifies the UPF 1 to provide the UE with the clock information meeting the time service precision required by the UE.

In an implementation method, the TNF further obtains, from a UDM, a time service precision to which the UE subscribes. If the time service precision to which the UE subscribes is higher than or equal to the time service precision required by the UE, and the clock network element meeting the time service precision required by the UE exists, the TNF notifies the clock network element to provide the UE with the clock information meeting the time service precision required by the UE. If the time service precision to which the UE subscribes is higher than or equal to the time service precision required by the UE, it indicates that the time service precision required by the UE is allowed, or it may be understood that the time service precision required by the UE is not allowed to be higher than the time service precision to which the UE subscribes. Therefore, if the time service precision to which the UE subscribes is lower than the time service precision required by the UE, the TNF obtains a clock network element that can provide the time service precision to which the UE subscribes, and notifies the clock network element to provide the UE with clock information meeting the time service precision to which the UE subscribes.

Step 304b: If the clock network element meeting the time service precision required by the UE does not exist, the TNF sends a second notification message to the UE, where the second notification message includes second indication information, and the second indication information indicates that the time service precision required by the UE cannot be met.

After the TNF sends the second notification message to the UE, the UE learns, based on the second indication information, that the time service precision required by the UE cannot be met. Optionally, the second notification message further includes identification information of one or more clock network elements and one or more time service precisions of each clock network element. If the UE can accept reduction of a time service precision, the UE may select one clock network element from the clock network elements and select one time service precision of the clock network element, and then the UE sends a request message to the TNF. The request message includes the identification information of the UE, identification information of the clock network element selected by the UE, and the time service precision selected by the UE. Next, the TNF notifies the clock network element selected by the UE to provide clock information for the UE. The clock information meets the time service precision selected by the UE. Therefore, the UE performs clock synchronization based on the selected clock information.

In an implementation method, the TNF further obtains, from a UDM, a time service precision to which the UE subscribes. If the time service precision to which the UE subscribes is higher than or equal to the time service precision required by the UE, but the clock network element meeting the time service precision required by the UE does not exist, the TNF sends the second notification message to the UE. If the time service precision to which the UE subscribes is higher than or equal to the time service precision required by the UE, it indicates that the time service precision required by the UE is allowed, or it may be understood that the time service precision required by the UE is not allowed to be higher than the time service precision to which the UE subscribes. Therefore, if the time service precision to which the UE subscribes is lower than the time service precision required by the UE, the TNF obtains a clock network element that can provide the time service precision to which the UE subscribes, and notifies the clock network element to provide the UE with clock information meeting the time service precision to which the UE subscribes.

In the foregoing solution, when a time service of the UE is abnormal, the TNF may be notified, so that the TNF reselects a clock network element, and notifies the clock network element to provide the UE with clock information of a specific time service precision. The clock network element selected by the TNF may meet the time service precision required by the UE, or may not meet the time service precision required by the UE. In this solution, clock information of a proper time service precision can be provided for the UE, thereby helping implement normal clock synchronization of the UE.

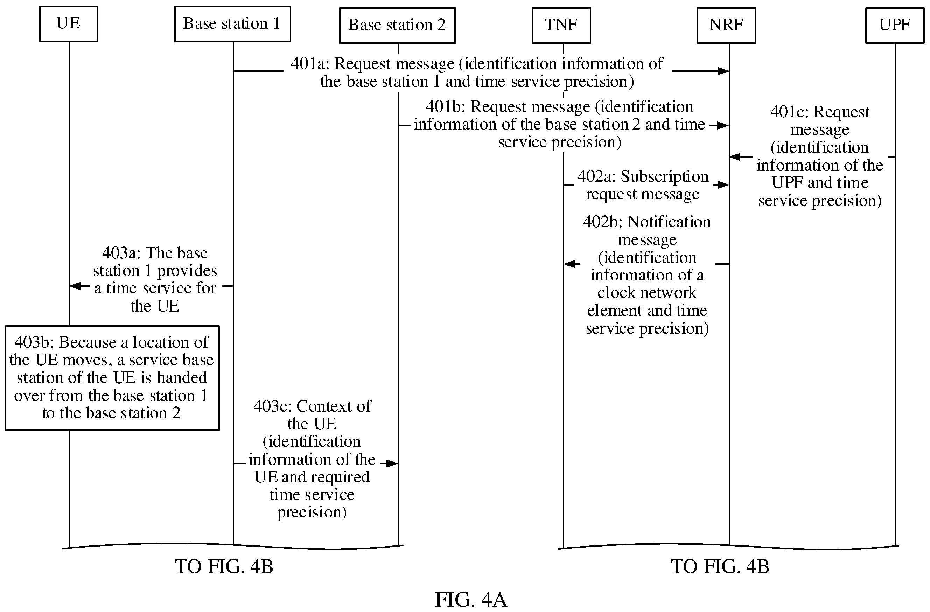

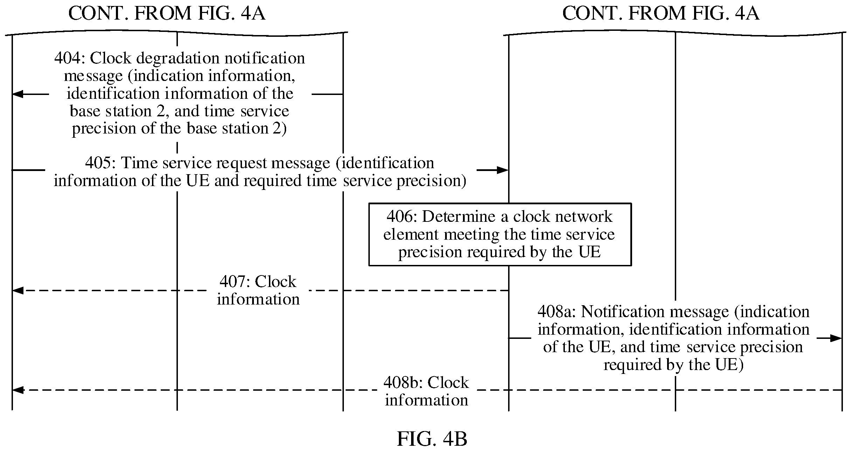

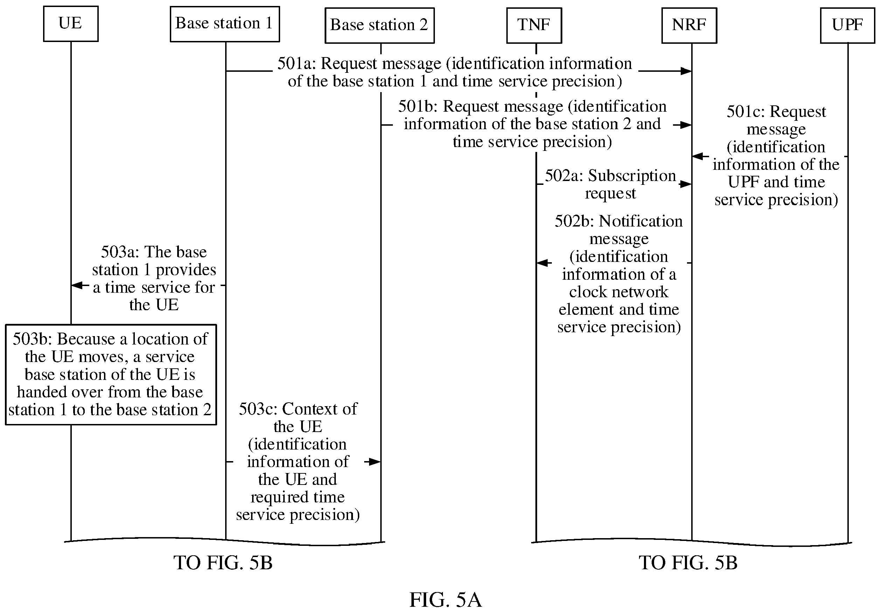

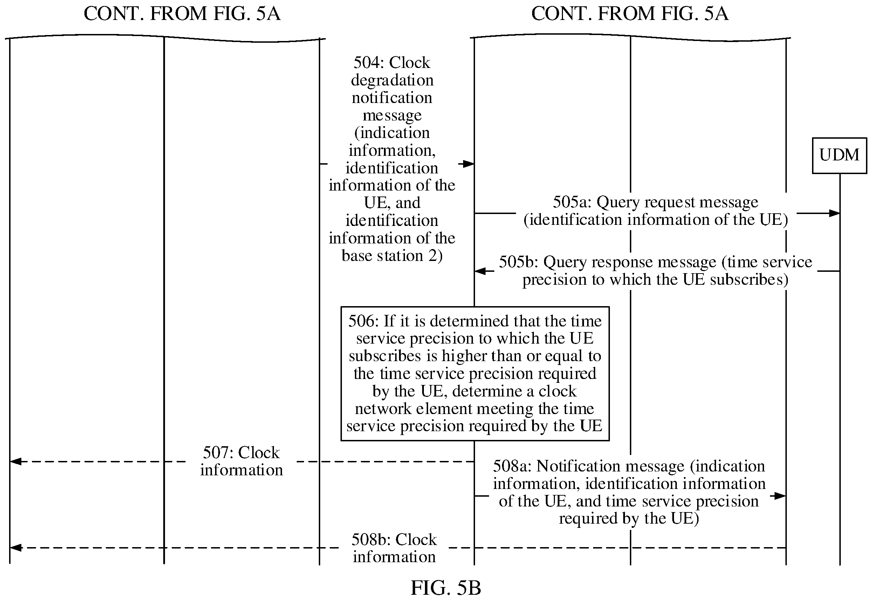

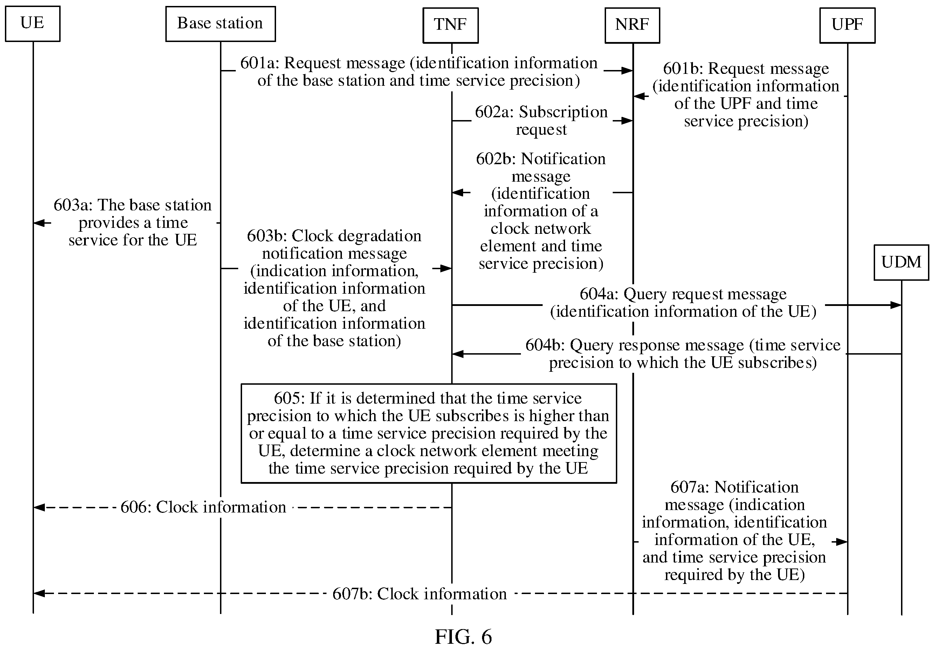

The following describes the embodiments in FIG. 3(a) and FIG. 3(b) in detail with reference to specific embodiments. The following embodiment in FIG. 4A and FIG. 4B is a specific implementation of the embodiment in FIG. 3(a). The following embodiments in FIG. 5A and FIG. 5B and FIG. 6 are specific implementations of the embodiment in FIG. 3(b).

FIG. 4A and FIG. 4B are a flowchart of a time service method according to an embodiment of this application. A base station 1 is a base station that provides a service for UE before handover, and a base station 2 is a base station that provides a service for the UE after handover. The base station 2 cannot provide clock information meeting a time service precision required by the UE.

The method includes the following steps.

Step 401a: The base station 1 sends a request message to an NRF, where the request message includes identification information of the base station 1 and time service precisions of one or more clock sources on the base station 1.

If only one clock source exists on the base station 1, the request message includes a time service precision of the clock source. If a plurality of clock sources exist on the base station 1, the request message may include time service precisions of one or more clock sources.

Step 401b: The base station 2 sends a request message to the NRF, where the request message includes identification information of the base station 2 and time service precisions of one or more clock sources on the base station 2.

If only one clock source exists on the base station 2, the request message includes a time service precision of the clock source. If a plurality of clock sources exist on the base station 2, the request message may include time service precisions of one or more clock sources.

Step 401c: A UPF sends a request message to the NRF, where the request message includes identification information of the UPF and time service precisions of one or more clock sources on the UPF.

If only one clock source exists on the UPF, the request message includes a time service precision of the clock source. If a plurality of clock sources exist on the UPF, the request message may include time service precisions of one or more clock sources.

Optionally, if there is another network element on which a clock source is deployed, the another network element may send identification information of the another network element and time service precisions of one or more clock sources on the another network element to the NRF in the foregoing manner. The another network element may be, for example, a network element such as an SMF or a PCF.

The time service precision in step 401a, step 401b, and step 401c is a unit to which time service information may be accurate, for example, a nanosecond (ns) or a microsecond (µs).

In an implementation method, the request message in step 401a, step 401b, and step 401c may be an NG setup request message.

An execution sequence of step 401a, step 401b, and step 401c is not limited.

Step 402a: The TNF sends a subscription request message to the NRF, where the subscription request message is used to subscribe to a time service precision of a clock network element.

The time service precision of the clock network element is a time service precision of a clock source in the clock network element.

Step 402b: The NRF sends a notification message to the TNF, where the notification message includes identification information of the clock network element and the time service precision of the clock network element.

The clock network element herein includes but is not limited to the base station 1, the base station 2, and the UPF.

Each clock network element may have one or more time service precisions.

As described in step 402a and step 402b, the TNF obtains the time service precision of each clock network element in a subscription manner. In an alternative implementation method, the NRF may actively send the time service precision of each clock network element to the TNF.

Step 403a: The base station 1 provides a time service for the UE.

A specific process of this step is as follows: The UE sends a time service request message to the base station 1, where the time service request message includes identification information of the UE and the time service precision required by the UE. The base station 1 sends the time service request message to an AMF, and the AMF sends the time service request message to the TNF. If the TNF determines that the base station 1 meets the time service precision required by the UE, the TNF notifies the base station 1 to provide the time service for the UE, so that the base station 1 sends clock information to the UE, and then the UE implements clock synchronization based on the clock information.

Step 403b: Because a location of the UE moves, a serving base station of the UE is handed over from the base station 1 to the base station 2.

Step 403c: The base station 1 sends a context of the UE to the base station 2, where the context includes the identification information of the UE and the time service precision required by the UE.

The base station 1 may send the context of the UE to the base station 2 through an interface between the base station 1 and the base station 2, or the base station 1 sends the context of the UE to the AMF, and the AMF forwards the context of the UE to the base station 2.

Step 404: If the base station 2 determines that the time service precision required by the UE cannot be met, the base station 2 sends a clock degradation notification message to the UE, where the clock degradation notification message includes indication information, identification information of the base station 2, and a time service precision of the base station 2.

The indication information indicates that the base station 2 cannot meet the time service precision required by the UE.

The time service precision of the base station 2 may be time service precisions of one or more clock sources of the base station 2.

Step 405: If the UE determines that reduction of a time service precision is not accepted, the UE sends a time service request message to the TNF, where the time service request message includes the identification information of the UE and the time service precision required by the UE.

In an implementation method, the time service request message may be a NAS message or a PDU session establishment request message.

It should be noted that, if the UE determines to accept reduction of a time service precision, the UE does not need to perform step 405 and subsequent steps, but the base station 2 provides a time service for the UE. For a specific implementation process, refer to the description of step 403a.

Step 406: The TNF determines a clock network element meeting the time service precision required by the UE.

The clock network element herein may be the base station 1, the UPF, or another network element. If the TNF has a clock source, when a time service precision of the clock source in the TNF meets the time service precision required by the UE, the TNF may determine that the TNF provides a time service for the UE.

Step 407: The TNF sends clock information to the UE.

The UE may implement clock synchronization based on the clock information.

When it is determined in step 406 that the clock network element meeting the time service precision required by the UE is the TNF, step 407 is performed, that is, the TNF provides the time service for the UE.

Step 408a: The TNF sends a notification message to the UPF, where the notification message includes indication information, the identification information of the UE, and the time service precision required by the UE, and the indication information indicates the UPF to provide a time service for the UE.

Step 408b: The UPF sends clock information to the UE.

The UE may implement clock synchronization based on the clock information.

When it is determined in step 406 that the clock network element meeting the time service precision required by the UE is the UPF, step 408a and step 408b are performed, that is, the UPF provides the time service for the UE.

In the foregoing solution, when the location of the UE moves, if a base station after handover cannot meet the time service precision required by the UE, and the UE does not accept reduction of a time service precision, the TNF may select, for the UE based on a request of the UE, a clock network element that can meet the time service precision required by the UE, and the clock network element provides, for the UE, clock information meeting the time service precision required by the UE, so that clock information of a proper time service precision can be provided for the UE.

FIG. 5A and FIG. 5B are a flowchart of a time service method according to an embodiment of this application. A base station 1 is a base station that provides a service for UE before handover, and a base station 2 is a base station that provides a service for the UE after handover. The base station 2 cannot provide clock information meeting a time service precision required by the UE.

The method includes the following steps.

Step 501a is the same as step 401a.

Step 501b is the same as step 401b.

Step 501c is the same as step 401c.

An execution sequence of step 501a, step 501b, and step 501c is not limited.

Step 502a is the same as step 402a.

Step 502b is the same as step 402b.

Step 503a is the same as step 403a.

Step 503b is the same as step 403b.

Step 503c is the same as step 403c.

Step 504: If the base station 2 determines that the time service precision required by the UE cannot be met, the base station 2 sends a clock degradation notification message to the TNF, where the clock degradation notification message includes indication information, the identification information of the UE, and the identification information of the base station 2, and further includes the time service precision required by the UE or the identification information of the base station 1.

The indication information indicates that the base station 2 cannot meet the time service precision required by the UE.

Step 505a: The TNF sends a query request message to a UDM, where the query request message includes the identification information of the UE, and the query request message is used to request to query a time service precision to which the UE subscribes.

Step 505b: The UDM sends a query response message to the TNF, where the query response message includes the time service precision to which the UE subscribes.

Step 505a and step 505b are optional steps.

Step 506: If the TNF determines that the time service precision to which the UE subscribes is higher than or equal to the time service precision required by the UE, the TNF determines a clock network element meeting the time service precision required by the UE.

A manner in which the TNF obtains the time service precision required by the UE may be any one of the following:
Manner 1: The clock degradation notification message in step 504 includes the time service precision required by the UE.
Manner 2: If the clock degradation notification message in step 504 includes the identification information of the base station 1, the TNF requests the base station 1 to obtain the time service precision required by the UE.

The clock network element meeting the time service precision required by the UE herein may be the base station 1, the UPF, or another network element. If the TNF has a clock source, when a time service precision of the clock source in the TNF meets the time service precision required by the UE, the TNF may determine that the TNF provides a time service for the UE.

It should be noted that, if step 505a and step 505b are not performed, step 506 is replaced with the following step: The TNF determines a clock network element meeting the time service precision required by the UE.

Step 507: The TNF sends clock information to the UE.

The UE may implement clock synchronization based on the clock information.

When it is determined in step 506 that the clock network element meeting the time service precision required by the UE is the TNF, step 507 is performed, that is, the TNF provides the time service for the UE.

Step 508a: The TNF sends a notification message to the UPF, where the notification message includes indication information, the identification information of the UE, and the time service precision required by the UE, and the indication information indicates the UPF to provide a time service for the UE.

Step 508b: The UPF sends clock information to the UE.

The UE may implement clock synchronization based on the clock information.

When it is determined in step 506 that the clock network element meeting the time service precision required by the UE is the UPF, step 508a and step 508b are performed, that is, the UPF provides the time service for the UE.

It should be noted that, in step 506, if the TNF determines that the time service precision to which the UE subscribes is higher than or equal to the time service precision required by the UE, but the TNF does not obtain the clock network element meeting the time service precision required by the UE, the TNF may send a clock degradation notification message to the UE. The clock degradation notification message includes indication information, identification information of the clock network element, and one or more time service precisions that can be provided by the clock network element, the clock network element may be one or more of the base station, the UPF, the TNF, or another network element, and the indication information indicates that the time service precision required by the UE cannot be met. Then, the UE selects a clock network element and selects a time service precision of the clock network element, where the selected time service precision is lower than the time service precision required by the UE. Next, the UE sends a time service request message to the TNF, where the time service request message includes the identification information of the UE, identification information of the clock network element selected by the UE, and the time service precision selected by the UE. Then, the TNF notifies, based on the time service request message, the clock network element selected by the UE to send clock information to the UE, and the UE performs clock synchronization based on the clock information.

It should be noted that, in step 506, if the TNF determines that the time service precision to which the UE subscribes is lower than the time service precision required by the UE, it indicates that the time service precision required by the UE is not subscribed to. In this case, the TNF may not select, based on the time service precision required by the UE, a clock network element that provides a time service for the UE, but select, based on the time service precision to which the UE subscribes, a clock network element that provides a time service for the UE, and then the clock network element provides the time service for the UE based on the time service precision to which the UE subscribes.

In the foregoing solution, when the location of the UE moves, if a base station after handover cannot meet the time service precision required by the UE, the base station after handover may notify the TNF. The TNF selects, for the UE, a clock network element that can meet the time service precision required by the UE or meet the time service precision to which the UE subscribes, and the clock network element provides clock information for the UE, so that clock information of a proper time service precision can be provided for the UE.

FIG. 6 is a flowchart of a time service method according to an embodiment of this application. A clock source in a base station is faulty, and cannot continue to provide UE with clock information meeting a time service precision required by the UE.

The method includes the following steps.

Step 601a: The base station sends a request message to an NRF, where the request message includes identification information of the base station and time service precisions of one or more clock sources on the base station.

For a specific implementation of step 601a, refer to the description of step 401a.

Step 601b is the same as step 401c.

An execution sequence of step 601a and step 601b is not limited.

Step 602a is the same as step 402a.

Step 602b is the same as step 402b.

Step 603a: The base station provides a time service for the UE.

For a specific implementation of step 603a, refer to the description of step 403a.

Step 603b: If the clock source in the base station is faulty, and cannot provide the UE with the clock information meeting the time service precision required by the UE, and another clock source (if any) of the base station cannot provide the UE with the clock information meeting the time service precision required by the UE, the base station sends a clock degradation notification message to the TNF, where the clock degradation notification message includes indication information, identification information of the UE, and identification information of the base station, and further includes the time service precision required by the UE or identification information of the faulty clock source.

The indication information indicates that the base station cannot meet the time service precision required by the UE.

The identification information of the faulty clock source may be a clock domain number of the clock source.

Step 604a is the same as step 505a.

Step 604b is the same as step 505b.

Step 604a and step 604b are optional steps.

Step 605: If the TNF determines that the time service precision to which the UE subscribes is higher than or equal to the time service precision required by the UE, the TNF determines a clock network element meeting the time service precision required by the UE.

A manner in which the TNF obtains the time service precision required by the UE may be any one of the following:
Manner 1: The clock degradation notification message in step 603b includes the time service precision required by the UE.
Manner 2: If the clock degradation notification message in step 603b includes identification information of a faulty clock source, the TNF sends the identification information of the faulty clock source to the base station, to request to obtain a time service precision of the clock source, where the time service precision of the clock source is the time service precision required by the UE.
Manner 3: If the clock degradation notification message in step 603b includes identification information of a faulty clock source, the TNF locally obtains a time service precision of the clock source, where the time service precision of the clock source is the time service precision required by the UE. The TNF obtains a time service precision of each clock source in the base station by using step 502a and step 502b.

The clock network element meeting the time service precision required by the UE herein may be the UPF or another network element. If the TNF has a clock source, when a time service precision of the clock source in the TNF meets the time service precision required by the UE, the TNF may determine that the TNF provides a time service for the UE.

It should be noted that, if step 604a and step 605b are not performed, step 605 is replaced with the following step: The TNF determines a clock network element meeting the time service precision required by the UE.

Step 606: The TNF sends clock information to the UE.

The UE may implement clock synchronization based on the clock information.

When it is determined in step 605 that the clock network element meeting the time service precision required by the UE is the TNF, step 606 is performed, that is, the TNF provides the time service for the UE.

Step 607a: The TNF sends a notification message to the UPF, where the notification message includes indication information, the identification information of the UE, and the time service precision required by the UE, and the indication information indicates the UPF to provide a time service for the UE.

Step 607b: The UPF sends clock information to the UE.

The UE may implement clock synchronization based on the clock information.

When it is determined in step 605 that the clock network element meeting the time service precision required by the UE is the UPF, step 607a and step 607b are performed, that is, the UPF provides the time service for the UE.

It should be noted that, in step 605, if the TNF determines that the time service precision to which the UE subscribes is higher than or equal to the time service precision required by the UE, but the TNF does not obtain the clock network element meeting the time service precision required by the UE, the TNF may send a clock degradation notification message to the UE. The clock degradation notification message includes indication information, identification information of the clock network element, and one or more time service precisions that can be provided by the clock network element, the clock network element may be one or more of the base station, the UPF, the TNF, or another network element, and the indication information indicates that the time service precision required by the UE cannot be met. Then, the UE selects a clock network element and selects a time service precision of the clock network element, where the selected time service precision is lower than the time service precision required by the UE. Next, the UE sends a time service request message to the TNF, where the time service request message includes the identification information of the UE, identification information of the clock network element selected by the UE, and the time service precision selected by the UE. Then, the TNF notifies, based on the time service request message, the clock network element selected by the UE to send clock information to the UE, and the UE performs clock synchronization based on the clock information.

It should be noted that, in step 605, if the TNF determines that the time service precision to which the UE subscribes is lower than the time service precision required by the UE, it indicates that the time service precision required by the UE is not subscribed to. In this case, the TNF may not select, based on the time service precision required by the UE, a clock network element that provides a time service for the UE, but select, based on the time service precision to which the UE subscribes, a clock network element that provides a time service for the UE, and then the clock network element provides the time service for the UE based on the time service precision to which the UE subscribes.

In the foregoing solution, when a clock source in the base station that provides a time service for the UE is faulty, and another clock source (if any) of the base station cannot meet the time service precision required by the UE, the base station may notify the TNF. The TNF selects, for the UE, a clock network element that can meet the time service precision required by the UE or meet the time service precision to which the UE subscribes, and the clock network element provides clock information for the UE, so that clock information of a proper time service precision can be provided for the UE.

It may be understood that, to implement the functions in the foregoing embodiments, the clock management network element, the access network device, or the terminal device includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

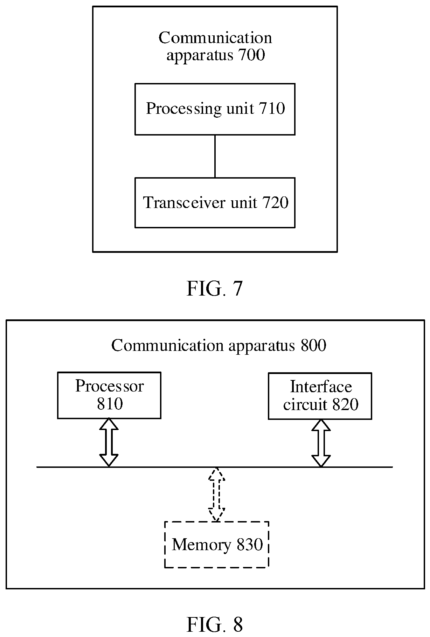

FIG. 7 and FIG. 8 are diagrams of structures of possible communication apparatuses according to embodiments of this application. These communication apparatuses may be configured to implement functions of the clock management network element, the access network device, or the terminal device in the foregoing method embodiments, and therefore can also implement beneficial effects of the foregoing method embodiments. In embodiments of this application, the communication apparatus may be a clock management network element, an access network device, or a terminal device, or may be a module (such as a chip) in the clock management network element, a module (such as a chip) in the access network device, or a module (such as a chip) in the terminal device.

As shown in FIG. 7, the communication apparatus 700 includes a processing unit 710 and a transceiver unit 720. The communication apparatus 700 is configured to implement functions of the clock management network element, the access network device, or the terminal device in the foregoing method embodiments. The transceiver unit 720 may be configured to implement a corresponding communication function. The transceiver unit 720 may also be referred to as a communication interface or a communication unit. The processing unit 710 may be configured to implement a corresponding processing function. Optionally, the communication apparatus 700 further includes a storage unit. The storage unit may be configured to store instructions and/or data. The processing unit 710 may read the instructions and/or the data in the storage unit, so that the communication apparatus 700 implements actions of the clock management network element (for example, the TNF), the terminal device (for example, the UE), or the access network device (for example, the first base station) in the foregoing method embodiments.

When the communication apparatus 700 is configured to implement the function of the clock management network element in the foregoing method embodiments, the transceiver unit 720 is configured to receive a first notification message from a first access network device, where the first notification message includes first indication information, identification information of the first access network device, and identification information of a terminal device, and the first indication information indicates that the first access network device cannot meet a time service precision required by the terminal device. The processing unit 710 is configured to obtain the time service precision required by the terminal device. The transceiver unit 720 is further configured to notify, if a clock network element meeting the time service precision required by the terminal device exists, the clock network element to provide the terminal device with clock information meeting the time service precision required by the terminal device.

In a possible implementation method, the transceiver unit 720 is specifically configured to: obtain, from a unified data management network element, a time service precision to which the terminal device subscribes; and if the time service precision to which the terminal device subscribes is higher than or equal to the time service precision required by the terminal device, and the clock network element meeting the time service precision required by the terminal device exists, notify the clock network element to provide the terminal device with the clock information meeting the time service precision required by the terminal device.

In a possible implementation method, the transceiver unit 720 is further configured to send a second notification message to the terminal device if the clock network element meeting the time service precision required by the terminal device does not exist, where the second notification message includes second indication information, and the second indication information indicates that the time service precision required by the terminal device cannot be met.

In a possible implementation method, the second notification message further includes identification information of one or more clock network elements and one or more time service precisions of the clock network element. The transceiver unit 720 is further configured to: receive a request message from the terminal device, where the request message includes the identification information of the terminal device, identification information of a clock network element selected by the terminal device, and a time service precision selected by the terminal device; and notify the clock network element selected by the terminal device to provide clock information for the terminal device, where the clock information meets the time service precision selected by the terminal device.

In a possible implementation method, the transceiver unit 720 is specifically configured to: obtain, from a unified data management network element, a time service precision to which the terminal device subscribes; and send the second notification message to the terminal device if the time service precision to which the terminal device subscribes is higher than or equal to the time service precision required by the terminal device, but the clock network element meeting the time service precision required by the terminal device does not exist.

In a possible implementation method, the first notification message further includes the time service precision required by the terminal device. The processing unit 710 is specifically configured to obtain, from the first notification message, the time service precision required by the terminal device.

In a possible implementation method, the first notification message further includes identification information of a faulty clock source in the first access network device, the clock source provides clock information for the terminal device, and the clock information meets the time service precision required by the terminal device. The processing unit 710 is specifically configured to: obtain a time service precision of the clock source from the first access network device or the communication apparatus, and determine that the time service precision of the clock source is the time service precision required by the terminal device.

In a possible implementation method, the first notification message further includes identification information of a second access network device, the second access network device is an access network device that provides a service for the terminal device before handover, and the first access network device is an access network device that provides a service for the terminal device after handover. The processing unit 710 is specifically configured to: send a query message to the second access network device through the transceiver unit 720, where the query message includes the identification information of the terminal device, and the query message is used to query the time service precision required by the terminal device; and receive, from the second access network device through the transceiver unit 720, the time service precision required by the terminal device.

When the communication apparatus 700 is configured to implement the function of the terminal device in the foregoing method embodiments, the transceiver unit 720 is configured to: receive a notification message from an access network device, where the notification message includes indication information and a time service precision of the access network device, and the indication information indicates that the access network device cannot meet a time service precision required by the terminal device; and send a first request message to a clock management network element if the processing unit 710 determines that reduction of a time service precision is not accepted, where the first request message includes identification information of the terminal device and the time service precision required by the terminal device, and the first request message is used to request clock information meeting the time service precision required by the terminal device.

In a possible implementation method, the transceiver unit 720 is further configured to send a second request message to the access network device if the processing unit 710 determines that reduction of a time service precision is accepted, where the second request message includes the identification information of the terminal device, and the second request message is used to request the access network device to provide a time service for the terminal device.

In a possible implementation method, the time service precision of the access network device is a plurality of time service precisions, and the processing unit 710 is further configured to select one time service precision from the plurality of time service precisions, where the second request message further includes the selected time service precision.

In a possible implementation method, the access network device is an access network device that provides a service for the terminal device after handover; or the access network device is an access network device that currently provides a service for the terminal device, a clock source in the access network device is faulty, the clock source provides clock information for the terminal device before the clock source is faulty, and the clock information meets time service precision required by the terminal device.

When the communication apparatus 700 is configured to implement the function of the access network device (for example, the first access network device) in the foregoing method embodiments, the processing unit 710 is configured to determine that a time service precision required by a terminal device cannot be met. The transceiver unit 720 is configured to send a notification message to a clock management network element, where the notification message includes indication information, identification information of the first access network device, and identification information of the terminal device, and the indication information indicates that the first access network device cannot meet the time service precision required by the terminal device.

In a possible implementation method, a clock source in the first access network device is faulty, the clock source provides clock information for the terminal device before the clock source is faulty, and the clock information meets the time service precision required by the terminal device.

In a possible implementation method, the notification message further includes the time service precision required by the terminal device.

In a possible implementation method, the notification message further includes identification information of a second access network device, the second access network device is an access network device that provides a service for the terminal device before handover, and the first access network device is an access network device that provides a service for the terminal device after handover.

For more detailed descriptions about the processing unit 710 and the transceiver unit 720, directly refer to related descriptions in the foregoing method embodiments. Details are not described herein again.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run the instructions, or store data generated after the processor 810 runs the instructions.

When the communication apparatus 800 is configured to implement the foregoing method embodiments, the processor 810 is configured to implement a function of the processing unit 710, and the interface circuit 820 is configured to implement a function of the transceiver unit 720.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. Certainly, the processor and the storage medium may exist in a base station or terminal as discrete components.

All or some of the foregoing embodiments may be implemented by using software, hardware, firmware, or any combination thereof. When the software is used for implementation, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a base station, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A time service method, comprising:
receiving, by a clock management network element, a first notification message from a first access network device, wherein the first notification message comprises first indication information, identification information of the first access network device, and identification information of a terminal device, and the first indication information indicates that the first access network device cannot meet a time service precision required by the terminal device;
obtaining, by the clock management network element, the time service precision required by the terminal device; and
notifying, by the clock management network element if a clock network element meeting the time service precision required by the terminal device exists, the clock network element to provide the terminal device with clock information meeting the time service precision required by the terminal device.

2. The method according to claim 1, wherein the notifying, by the clock management network element if a clock network element meeting the time service precision required by the terminal device exists, the clock network element to provide the terminal device with clock information meeting the time service precision required by the terminal device comprises:
obtaining, by the clock management network element from a unified data management network element, a time service precision to which the terminal device subscribes; and
if the time service precision to which the terminal device subscribes is higher than or equal to the time service precision required by the terminal device, and the clock network element meeting the time service precision required by the terminal device exists, notifying, by the clock management network element, the clock network element to provide the terminal device with the clock information meeting the time service precision required by the terminal device.

3. The method according to claim 1, wherein the method further comprises:
sending, by the clock management network element, a second notification message to the terminal device if the clock network element meeting the time service precision required by the terminal device does not exist, wherein the second notification message comprises second indication information, and the second indication information indicates that the time service precision required by the terminal device cannot be met.

4. The method according to claim 3, wherein the second notification message further comprises identification information of one or more clock network elements and one or more time service precisions of the clock network element; and
the method further comprises:
receiving, by the clock management network element, a request message from the terminal device, wherein the request message comprises the identification information of the terminal device, identification information of a clock network element selected by the terminal device, and a time service precision selected by the terminal device; and
notifying, by the clock management network element, the clock network element selected by the terminal device to provide clock information for the terminal device, wherein the clock information meets the time service precision selected by the terminal device.

5. The method according to claim 3 or 4, wherein the sending, by the clock management network element, a second notification message to the terminal device if the clock network element meeting the time service precision required by the terminal device does not exist comprises:
obtaining, by the clock management network element from a unified data management network element, a time service precision to which the terminal device subscribes; and
sending, by the clock management network element, the second notification message to the terminal device if the time service precision to which the terminal device subscribes is higher than or equal to the time service precision required by the terminal device, but the clock network element meeting the time service precision required by the terminal device does not exist.

6. The method according to any one of claims 1 to 5, wherein the first notification message further comprises the time service precision required by the terminal device; and
the obtaining, by the clock management network element, the time service precision required by the terminal device comprises:
obtaining, by the clock management network element from the first notification message, the time service precision required by the terminal device.

7. The method according to any one of claims 1 to 5, wherein the first notification message further comprises identification information of a faulty clock source in the first access network device, the clock source provides clock information for the terminal device, and the clock information meets the time service precision required by the terminal device; and
the obtaining, by the clock management network element, the time service precision required by the terminal device comprises:
obtaining, by the clock management network element, a time service precision of the clock source from the first access network device or the clock management network element, and determining that the time service precision of the clock source is the time service precision required by the terminal device.

8. The method according to any one of claims 1 to 5, wherein the first notification message further comprises identification information of a second access network device, the second access network device is an access network device that provides a service for the terminal device before handover, and the first access network device is an access network device that provides a service for the terminal device after handover; and
the obtaining, by the clock management network element, the time service precision required by the terminal device comprises:
sending, by the clock management network element, a query message to the second access network device, wherein the query message comprises the identification information of the terminal device, and the query message is used to query the time service precision required by the terminal device; and
receiving, by the clock management network element from the second access network device, the time service precision required by the terminal device.

9. A time service method, comprising:
receiving, by a terminal device, a notification message from an access network device, wherein the notification message comprises indication information and a time service precision of the access network device, and the indication information indicates that the access network device cannot meet a time service precision required by the terminal device; and
sending, by the terminal device, a first request message to a clock management network element if the terminal device does not accept reduction of a time service precision, wherein the first request message comprises identification information of the terminal device and the time service precision required by the terminal device, and the first request message is used to request clock information meeting the time service precision required by the terminal device.

10. The method according to claim 9, wherein
sending, by the terminal device, a second request message to the access network device if the terminal device accepts reduction of a time service precision, wherein the second request message comprises the identification information of the terminal device, and the second request message is used to request the access network device to provide a time service for the terminal device.

11. The method according to claim 10, wherein the time service precision of the access network device is a plurality of time service precisions, and the method further comprises:
selecting, by the terminal device, one time service precision from the plurality of time service precisions, wherein
the second request message further comprises the selected time service precision.

12. The method according to any one of claims 9 to 11, wherein the access network device is an access network device that provides a service for the terminal device after handover; or
the access network device is an access network device that currently provides a service for the terminal device, a clock source in the access network device is faulty, the clock source provides clock information for the terminal device before the clock source is faulty, and the clock information meets the time service precision required by the terminal device.

13. A communication apparatus, comprising a processing unit and a transceiver unit, wherein
the transceiver unit is configured to receive a first notification message from a first access network device, wherein the first notification message comprises first indication information, identification information of the first access network device, and identification information of a terminal device, and the first indication information indicates that the first access network device cannot meet a time service precision required by the terminal device;
the processing unit is configured to obtain the time service precision required by the terminal device; and
the transceiver unit is further configured to notify, if a clock network element meeting the time service precision required by the terminal device exists, the clock network element to provide the terminal device with clock information meeting the time service precision required by the terminal device.

14. The apparatus according to claim 13, wherein the transceiver unit is specifically configured to: obtain, from a unified data management network element, a time service precision to which the terminal device subscribes; and if the time service precision to which the terminal device subscribes is higher than or equal to the time service precision required by the terminal device, and the clock network element meeting the time service precision required by the terminal device exists, notify the clock network element to provide the terminal device with the clock information meeting the time service precision required by the terminal device.

15. The apparatus according to claim 13, wherein the transceiver unit is further configured to send a second notification message to the terminal device if the clock network element meeting the time service precision required by the terminal device does not exist, wherein the second notification message comprises second indication information, and the second indication information indicates that the time service precision required by the terminal device cannot be met.

16. The apparatus according to claim 15, wherein the second notification message further comprises identification information of one or more clock network elements and one or more time service precisions of the clock network element; and
the transceiver unit is further configured to receive a request message from the terminal device, wherein the request message comprises the identification information of the terminal device, identification information of a clock network element selected by the terminal device, and a time service precision selected by the terminal device; and notify the clock network element selected by the terminal device to provide clock information for the terminal device, wherein the clock information meets the time service precision selected by the terminal device.

17. The apparatus according to claim 15 or 16, wherein the transceiver unit is specifically configured to: obtain, from a unified data management network element, a time service precision to which the terminal device subscribes; and send the second notification message to the terminal device if the time service precision to which the terminal device subscribes is higher than or equal to the time service precision required by the terminal device, but the clock network element meeting the time service precision required by the terminal device does not exist.

18. The apparatus according to any one of claims 13 to 17, wherein the first notification message further comprises the time service precision required by the terminal device; and
the processing unit is specifically configured to obtain, from the first notification message, the time service precision required by the terminal device.

19. The apparatus according to any one of claims 13 to 17, wherein the first notification message further comprises identification information of a faulty clock source in the first access network device, the clock source provides clock information for the terminal device, and the clock information meets the time service precision required by the terminal device; and
the processing unit is specifically configured to: obtain a time service precision of the clock source from the first access network device or the communication apparatus, and determine that the time service precision of the clock source is the time service precision required by the terminal device.

20. The apparatus according to any one of claims 13 to 17, wherein the first notification message further comprises identification information of a second access network device, the second access network device is an access network device that provides a service for the terminal device before handover, and the first access network device is an access network device that provides a service for the terminal device after handover; and
the processing unit is specifically configured to: send a query message to the second access network device through the transceiver unit, wherein the query message comprises the identification information of the terminal device, and the query message is used to query the time service precision required by the terminal device; and receive, from the second access network device through the transceiver unit, the time service precision required by the terminal device.

21. A communication apparatus, comprising a transceiver unit and a processing unit, wherein
the transceiver unit is configured to: receive a notification message from an access network device, wherein the notification message comprises indication information and a time service precision of the access network device, and the indication information indicates that the access network device cannot meet a time service precision required by the terminal device; and send a first request message to a clock management network element if the processing unit determines that reduction of a time service precision is not accepted, wherein the first request message comprises identification information of the terminal device and the time service precision required by the terminal device, and the request message is used to request clock information meeting the time service precision required by the terminal device.

22. The apparatus according to claim 21, wherein
the transceiver unit is further configured to send a second request message to the access network device if the processing unit determines that reduction of a time service precision is accepted, wherein the second request message comprises the identification information of the terminal device, and the second request message is used to request the access network device to provide a time service for the terminal device.

23. The apparatus according to claim 22, wherein the time service precision of the access network device is a plurality of time service precisions, and the processing unit is further configured to select one time service precision from the plurality of time service precisions, wherein
the second request message further comprises the selected time service precision.

24. The apparatus according to any one of claims 21 to 23, wherein the access network device is an access network device that provides a service for the terminal device after handover; or
the access network device is an access network device that currently provides a service for the terminal device, a clock source in the access network device is faulty, the clock source provides clock information for the terminal device before the clock source is faulty, and the clock information meets the time service precision required by the terminal device.

25. A computer-readable storage medium, wherein the computer-readable storage medium stores a computer program or instructions, and when the computer program or the instructions are executed by a communication apparatus, the method according to any one of claims 1 to 8 or the method according to any one of claims 9 to 12 is implemented.

26. A communication system, comprising a first access network device and a clock management network element configured to perform the method according to any one of claims 1 to 8, wherein
the first access network device is configured to send a first notification message to the clock management network element.
